# EUROPÄISCHE PATENTSCHRIFT

(11) **EP 3 421 264 B1**
(45) Veröffentlichungstag und Bekanntmachung des Hinweises auf die Patenterteilung: **17.06.2020**
(21) Anmeldenummer: 18166939.1
(22) Anmeldetag: 12.04.2018
(51) Int. Cl.: B60C 11/13, B60C 11/03, B60C 11/12

(54) **FAHRZEUGLUFTREIFEN**
PNEUMATIC TYRE FOR A VEHICLE
PNEUMATIQUE DE VÉHICULE

(30) Priorität: 30.06.2017 DE 102017211130
(43) Veröffentlichungstag der Anmeldung: 02.01.2019
(73) Patentinhaber: Continental Reifen Deutschland GmbH, 30165 Hannover (DE)
(72) Erfinder: Bauer, Claudia, 31542 Bad Nenndorf (DE); Wiese, Klaus, 30559 Hannover (DE); Vennebörger, Martin, 30625 Hannover (DE); BERGER, Christoph, 30173 Hannover (DE); Schlittenhard, Jan, 30900 Wedemark (DE)
(74) Vertreter: Finger, Karsten

(56) Entgegenhaltungen:
- EP-A1- 0 609 195
- EP-A1- 2 463 123
- WO-A1-2008/122456
- WO-A1-2009/077231
- WO-A1-2016/078783
- WO-A1-2017/092898
- US-A- 3 055 410
- US-A1- 2008 000 565

## Beschreibung

Die Erfindung betrifft einen Fahrzeugluftreifen mit einem laufrichtungsgebunden ausgeführten Laufstreifen, welcher mit über die Laufstreifenbreite V-förmig zueinander verlaufenden Schrägrillen versehen ist, wobei der Laufstreifen Schulterblockreihen mit schulterseitigen Blöcken und einen zentralen Laufstreifenbereich mit mittleren Blöcken aufweist, wobei die mittleren Blöcke und die schulterseitigen Blöcke jeweils mit einer Anzahl von sich in Draufsicht parallel zueinander erstreckenden Einschnitten versehen sind, wobei im zentralen Laufstreifenbereich in jeder Laufstreifenhälfte zwischen in Umfangsrichtung benachbarten Schrägrillen zumindest zwei in Draufsicht gegensinnig zu den Schrägrillen geneigte Nuten mit Nutflanken verlaufen, welche den mittleren Blöcken gemeinsam mit den Schrägrillen in Draufsicht eine in Umfangsrichtung auf Spitzen stehende parallelogrammartige Gestalt verleihen.

Ein derartiger Fahrzeugluftreifen ist beispielsweise aus der WO 2017 092 898 A1 bekannt. Der laufrichtungsgebunden ausgeführte Laufstreifen dieses Fahrzeugluftreifens weist über die Laufstreifenbreite V-förmig zueinander verlaufenden Schrägrillen auf, zwischen welchen, bezogen auf die Umfangsrichtung, gegensinnig zu den Schrägrillen geneigte Nuten verlaufen. Die Nuten verlaufen zur Umfangsrichtung unter einem Winkel von 3° bis 15° und weisen in axialer Richtung gegeneinander versetzte, parallel zueinander verlaufende Nutabschnitte und einen diese verbindenden, kürzer als die Nutabschnitte ausgeführten Verbindungsabschnitt auf. Jene Nutabschnitte, welche beim Abrollen des Reifens bei Vorwärtsfahrt zuletzt in den Untergrund eintreten, sind schmäler ausgeführt als die beim Abrollen des Reifens bei Vorwärtsfahrt zuerst in den Untergrund eintretenden Nutabschnitte. Beim Auftreten von Querkräften bestimmter Größe ist unter Schließen des schmäleren Nutabschnittes ein gegenseitiges Abstützen der Blöcke ermöglicht, wodurch beim Auftreten von Querkräften Lenkkräfte optimal auf den Untergrund übertragen werden können.

Ein weiterer Fahrzeugluftreifen der eingangs genannten Art ist aus der EP 0 609 195 A1 bekannt. Der Laufstreifen dieses Fahrzeugluftreifens ist mit über die Laufstreifenbreite V-förmig zueinander verlaufenden und jeweils gebogen ausgeführten Schrägrillen versehen. Zwischen den Schrägrillen verlaufen Nuten, welche jeweils einen schmalen, beim Abrollen des Reifens bei Vorwärtsfahrt zuerst in den Untergrund eintretenden Nutabschnitt aufweisen. Bedingt durch die Gestalt der Nuten weisen die Profilblöcke an den schmalen Nutabschnitten quaderförmige, vorspringende Blockteile auf. Das Laufstreifenprofil eines solchen Reifens soll biegefest und stabil sein.

Ferner offenbart die EP 2 463 123 A1 einen Fahrzeugluftreifen mit einem Laufstreifen mit über einen zentralen Laufstreifenbereich V-förmig zueinander verlaufenden Schrägrillen. Zu jedem Pitch des Laufstreifens gehören dabei zwei Schrägrillen, von welchen die eine entlang der einen Pitchgrenze und die andere entlang der anderen Pitchgrenze verläuft. Dies beiden Schrägrillen weisen übereinstimmende Breiten auf und verlaufen unter übereinstimmend großen Winkeln zur Umfangsrichtung. Durch diese Maßnahmen soll der Fahrzeugluftreifen im Hinblick auf sein Aquaplaningverhalten und sein Abrollgeräusch optimiert sein.

Darüber hinaus ist aus der WO 2008 122 456 A1 ein Fahrzeugluftreifen mit einem Laufstreifen mit Umfangsrillen mit gerade verlaufenden Rillenkanten bekannt. In den Umfangsrillen sind an den Rillenflanken Vorsprünge ausgebildet, welche Teile oder Abschnitte spitzer Körper mit einer am Rillengrund liegenden Basisfläche und der Laufstreifenperipherie benachbarten Spitzen sind. Durch die Vorsprünge ist am Rillengrund der Umfangsrillen ein wellen- bzw. zickzackförmiger Rillengrundpfad gebildet. Die Vorsprünge sollen als "Steinauswerfer" und als "Schallbrecher" wirken.

Fahrzeugluftreifen der eingangs genannten Art sind insbesondere für das Fahren unter winterlichen Fahrbedingungen geeignet. Für die Fahreigenschaften von Winterreifen ist es günstig, diese mit einem sogenannten "Softcompound"-Laufstreifen zu versehen. Unter einem "Softcompound"-Laufstreifen ist ein solcher Laufstreifen zu verstehen, dessen mit dem Untergrund in Kontakt kommender Laufstreifenbereich aus einem Gummimaterial mit einer Härte von höchstens 60 Shore A besteht. Solche "Softcompound"-Laufstreifen weisen gegenüber härteren Laufstreifen in der Bodenaufstandsfläche eine größere Breite auf, die für die Fahreigenschaften auf schnee- und/oder eisbedeckten Fahrbahnen von Vorteil ist. Die sich bei "Softcompound"-Laufstreifen unter Krafteinwirkung verbiegenden Blöcke behindern beim Fahren auf nasser Fahrbahn jedoch die Wasserdrainage, wodurch die Aquaplaninggefahr erhöht wird.

Der Erfindung liegt daher die Aufgabe zugrunde, einen Fahrzeugluftreifen der eingangs genannten Art derart zu gestalten, dass gute Winterfahreigenschaften, insbesondere ein optimaler Schneegriff, sichergestellt sind, wobei gleichzeitig ein hohes Wasserdrainagevermögen gewährleistet sein soll.

Die gestellte Aufgabe wird erfindungsgemäß dadurch gelöst, dass zu den Nuten, welche gegensinnig zu den Schrägrillen geneigte sind, Nuten gehören, an deren Nutflanken zumindest jeweils ein keilförmiger Vorsprung ausgebildet ist, welche Vorsprünge in der Erstreckungsrichtung der Nut betrachtet überlappen, wobei zwischen den von gegenüberliegenden Nutflanken ausgehenden Vorsprüngen und zwischen jedem Vorsprung und der gegenüberliegenden Nutflanke ein Nutgrundpfad mit einer Breite von 0,5 mm bis 1,5 mm verläuft, wobei der Nutgrundpfad in radialer Richtung eine Tiefe von mindestens 0,5 mm und von höchstens 60% der Profiltiefe aufweist.

Ein gemäß der Erfindung ausgeführter Laufstreifen weist somit über die Laufstreifenbreite V-förmig zueinander verlaufende Schrägrillen auf, welche als Hauptentwässerungsrillen wirken und den Laufstreifen ein hohes Wasserdrainagevermögen verleihen. Zwischen diesen Schrägrillen verlaufen Nuten, in welchen Vorsprünge positioniert sind, sodass die Nuten jeweils einen schmalen Nutgrundpfad aufweisen. Unter Belastung stützen sich die mittleren Blöcke an den Vorsprüngen und damit auch gegeneinander ab. Diese Abstützung wirkt sich insbesondere bei Softcompound-Laufstreifen stabilisierend auf die mittleren Blöcke aus, welche dadurch ein für die Traktions- und Bremseigenschaften sowie die Seitenführung auf Schneefahrbahnen optimales Biegeverhalten zeigen und zu einer deutlichen Verbesserung dieser Fahreigenschaften beitragen. Die Abstützung bzw. Stabilisierung der mittleren Blöcke trägt ferner dazu bei, dass die in den mittleren Blöcken befindlichen Einschnitte unter Krafteinwirkung länger geöffnet bleiben, sodass die Einschnitte auch in Softcompound-Reifen ihre Wirkung effektiv entfalten. Zusätzlich begünstigen die Vorsprünge sowie insbesondere der schmale Nutgrundpfad beim Fahren auf schneebedeckten Fahrbahnen die Aufnahme von Schnee in den Nuten, sodass durch "Schnee-Schnee"-Reibung zwischen dem Laufstreifen und schneebedeckten Fahrbahnen die Traktions- und die Bremseigenschaften sowie die Seitenführung auf Schnee weiter verbessert sind. Ein erfindungsgemäßer Reifen ist somit hinsichtlich seiner Fahreigenschaften unter winterlichen Fahrbedingungen und hinsichtlich seines Wasserdrainagevermögens, also seiner Aquaplaningeigenschaften, sehr gut ausbalanciert.

Gemäß einer Ausführungsvariante der Erfindung ist jeder keilförmige Vorsprung in radialer Richtung durch eine Schrägfläche begrenzt, welche, im Querschnitt der Nut betrachtet, zur radialen Richtung unter einem Winkel von 10° bis 70°, insbesondere von 30° bis 45°, verläuft und derart geneigt ist, dass die Schrägfläche ausgehend von der Nutflanke in Richtung Nutgrundpfad verläuft. Keilförmige Vorsprünge mit solchen Schrägflächen tragen beim Fahren auf schneebedeckter Fahrbahn zu einer guten Verdichtung des Schnees in den Nuten bei, wodurch die Schnee-Schnee-Reibung zwischen Laufstreifen und Fahrbahn verstärkt wird. In diesem Zusammenhang ist es zusätzlich von Vorteil, wenn die Schrägfläche von einer in radialen Richtung ermittelten Tiefe von 20% bis 60%, insbesondere von mindestens 40%, der Profiltiefe ausgehend von der Nutflanke in Richtung Nutgrundpfad verläuft.

Gemäß einer weiteren bevorzugten Ausführungsvariante ist der Nutgrundpfad durch einen Boden begrenzt, welcher auf einem Niveau von mindestens 90% der Profiltiefe, insbesondere mindestens 95% der Profiltiefe, und besonders bevorzugter Weise auf dem Niveau der Profiltiefe verläuft. Durch diese Ausgestaltung sind die nebeneinander liegenden, durch die Nuten voneinander getrennten Blöcke derart entkoppelt, dass sie, insbesondere auch durch den erwähnten Abstützungseffekt der Vorsprünge, ein besonders vorteilhaftes Kippverhalten zeigen. Ferner wird den Nuten durch derartige Nutgrundpfade ein großes Leervolumen verliehen, wodurch eine effektive Entwässerung des Laufstreifens unterstützt wird und das Wasserdrainagevermögen erhöht ist.

Gemäß einer weiteren bevorzugten Ausführungsvariante beträgt die Tiefe des Nutgrundpfades bis zu 2,0 mm, bevorzugt bis zu 1,5 mm. Durch die Wahl der Tiefe des Nutgrundpfades in diesen Bereichen sind Softcompound-Laufstreifen aus Gummimaterialien verschiedener Härten besonders gut hinsichtlich der beschriebenen Effekte und Fahreigenschaften optimierbar. Beispielsweise verleiht ein tieferer Nutgrundpfad gegenüber einem seichteren Nutgrundpfad der Nut ein geringeres Leervolumen bzw. eine geringere Querschnittsfläche. Eine solche Nut füllt sich beim Fahren auf Schnee besonders schnell mit Schnee, sodass der Effekt der Schnee-Schnee-Reibung verstärkt ist. Außerdem geht ein tieferer Nutgrundpfad mit einem - bezogen auf das Volumen - größeren Vorsprung einher, welcher wiederdrum den Abstützungseffekt zwischen den Blöcken verstärkt. Nuten mit seichtem Nutgrundpfad können, bedingt durch die größere Querschnittsfläche der Nut, mehr Wasser aufnehmen, sodass das Wasserdrainagevermögen erhöht ist.

Bevorzugter Weise weist jeder Vorsprung an der Nutflanke an seiner breitesten Stelle eine Breite von 2,5 mm bis 8,0 mm, insbesondere von mindestens 5,0 mm, auf. Insbesondere zur Erzielung ausgeprägter Abstützungseffekte ist eine Mindestbreite von 2,5 mm von Vorteil.

Gemäß einer weiteren bevorzugten Ausführungsvariante verlaufen im zentralen Laufstreifenbereich in jeder Laufstreifenhälfte zwischen den in Umfangsrichtung benachbarten Schrägrillen zumindest drei gegensinnig zu den Schrägrillen geneigte Nuten.

Es ist ferner von Vorteil, wenn in jeder Laufstreifenhälfte zumindest in den beiden weiter laufstreifenaußenseitig verlaufenden Nuten Vorsprünge ausgebildet sind. Dies ist für die Seitenführung auf Schneefahrbahnen von Vorteil.

Bei einer bevorzugten Ausführungsvariante ist ferner vorgesehen, dass die Anzahl der an der weiter laufstreifenaußenseitig befindlichen Nutflanke der Nuten ausgebildeten Vorsprünge größer ist als die Anzahl der an der weiter laufstreifeninnenseitig befindlichen Nutflanke ausgebildeten Vorsprünge, wobei an der weiter laufstreifenaußenseitig befindlichen Nutflanke insbesondere drei Vorsprünge und an der weiter laufstreifeninnenseitig befindlichen Nutflanke insbesondere zwei Vorsprünge ausgebildet sind. Dies bedeutet, dass vorzugsweise an den bei den einlaufenden Blockkanten der mittleren Blöcke befindlichen Nutflanken drei Vorsprünge ausgebildet sind. Diese drei Vorsprünge stützen die Blöcke vor allem unter der beim Bremsen auftretenden Kraft effektiv gegeneinander ab. Die zwei Vorsprünge an der gegenüberliegenden Nutflanke stützen die Blöcke unter Einwirkung von Traktionskraft gut ab. Diese Ausgestaltung ist insbesondere deshalb von Vorteil, da die beim Bremsen wirkende Kraft deutlich größer ist als die Traktionskraft. Die mittleren Blöcke sind bei dieser Variante somit besonders günstig gegeneinander abgestützt.

Gemäß einer weiteren bevorzugten Ausführungsvariante reicht zumindest ein an der einen Nutflanke ausgebildeter Vorsprung in den Zwischenraum zwischen zwei unmittelbar benachbarte, an der gegenüberliegenden Nutflanke ausgebildete Vorsprünge. Dadurch können sich innerhalb der Nuten unmittelbar zueinander benachbarte Vorsprünge zusätzlich gegeneinander abstützen, was insbesondere für die Quersteifigkeit des Profils und die Seitenführung von Vorteil ist.

Eine besonders gleichmäßige Versteifung der mittleren Blöcke wird erreicht, wenn die innerhalb einer Nut befindlichen Vorsprünge in regelmäßigen Abständen über die Erstreckung der Nut angeordnet sind.

Gemäß einer weiteren bevorzugten Ausführungsvariante verlaufen die Nuten in Draufsicht zur Umfangsrichtung unter einem Winkel von 10° bis 50°, insbesondere von 25° bis 45°. Derart geneigte Nuten bilden einerseits relativ kurze Verbindungswege zwischen den Schrägrillen, wodurch vom Laufstreifen aufgenommenes Wasser besonders schnell in die Schrägrillen abgeleitet wird. Anderseits kann an diesen Nuten das durch die Schrägrillen zu den Laufstreifenaußenseiten strömende Wasser im Wesentlichen verwirbelungsfrei vorbeiströmen, was zur effektiven Wasserableitung beiträgt. In diesem Zusammenhang ist es ferner von Vorteil, wenn die Schrägrillen im zentralen Laufstreifenbereich in Draufsicht zur Umfangsrichtung unter einem Winkel von 20° bis 70°, vorzugsweise von 40° bis 60°, verlaufen.

Gemäß einer weiteren bevorzugten Ausführungsvariante nimmt der zentrale Laufstreifenbereich in axialer Richtung eine Breite von 50% bis 80% der Breite der Bodenaufstandsfläche ein. Gerade in diesem Laufstreifenbereich sind die beschriebenen Effekte von besonderer Bedeutung.

Bevorzugter Weise weisen die Nuten an den radial äußeren Enden ihrer Nutflanken eine Breite von 2,0 mm bis 6,0 mm auf.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf eine Teilabwicklung eines Laufstreifens eines Fahrzeugluftreifens mit einer Ausführungsvariante der Erfindung,
Fig. 2 einen Schnitt entlang der Linie II-II der Fig. 1 und
Fig. 3 eine Schrägansicht einer Nut des Laufstreifens gemäß der in Fig. 1 durch den Pfeil S gekennzeichneten Sichtrichtung.

Erfindungsgemäß ausgeführte Fahrzeugluftreifen sind vorzugsweise Winterreifen in Radialbauart für Personenkraftwagen, Vans oder Light-Trucks.

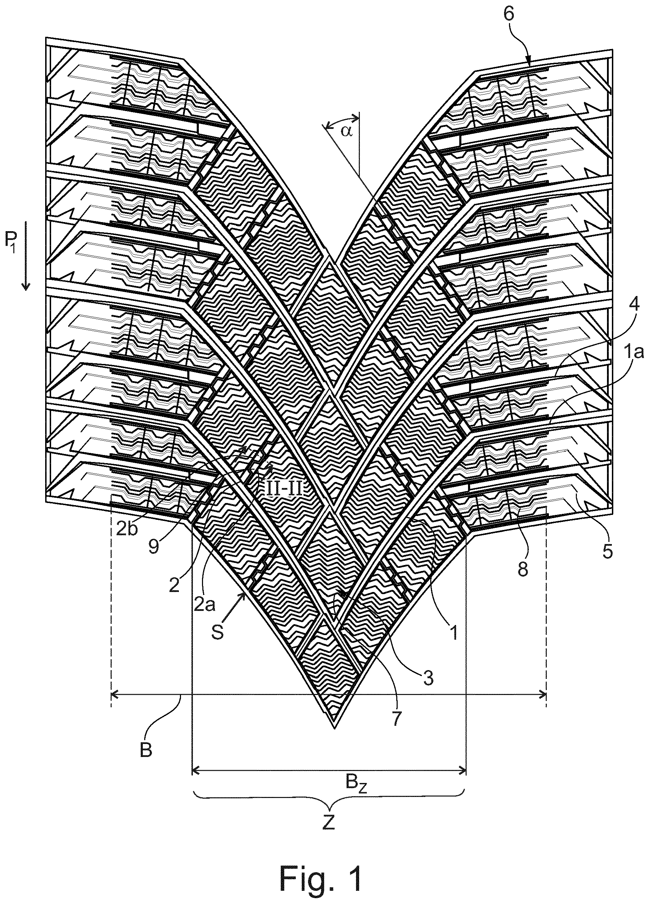

Der in Fig. 1 gezeigte Laufstreifen weist in jeder Laufstreifenhälfte parallel zueinander verlaufende Schrägrillen 1 auf, welche sich von der Laufstreifenmitte bis zu den Laufstreifenrändern erstrecken und dem Laufstreifen in Draufsicht ein gepfeiltes Profil verleihen. Die Schrägrillen 1 gehören zu den Hauptrillen des Laufstreifens und sind daher in radialer Richtung an ihrer tiefsten Stelle auf die für den jeweiligen Fahrzeugluftreifen vorgesehene Profiltiefe ausgeführt, welche üblicherweise 6,5 mm bis 10,0 mm beträgt. Die Abrollrichtung des Reifens bei Vorwärtsfahrt ist durch den Pfeil P₁ gekennzeichnet und derart, dass die Schrägrillen 1 bei Vorwärtsfahrt zuerst mit ihren laufstreifeninnenseitigen Enden in die Bodenaufstandsfläche eintreten. Die in Fig. 1 eingezeichnete Breite B der Bodenaufstandsfläche entspricht der Breite des statisch ermittelten Footprints bei einer Last von 70 % der maximalen Tragfähigkeit bei einem Innendruck von 85 %, ermittelt gemäß E.T.R.T.O.-Standards. Der Laufstreifen weist einen zentralen Laufstreifenbereich Z auf, welcher in axialer Richtung eine Breite Bz von 50% bis 80% der Breite B der Bodenaufstandsfläche einnimmt.

Im zentralen Laufstreifenbereich Z verlaufen die Schrägrillen 1 in Draufsicht unter einem Winkel von 20° bis 70°, vorzugsweise von 40° bis 60°, zur Umfangsrichtung sowie beim gezeigten Ausführungsbeispiel in Draufsicht leicht gebogen. Laufstreifenaußenseitig weist jede Schrägrille 1 einen außerhalb des zentralen Laufstreifenbereiches Z verlaufenden Rillenabschnitt 1a auf, welcher in Draufsicht unter einem von der axialen Richtung um bis zu 20°, insbesondere um bis zu 12°, abweichenden Winkel verläuft.

In jeder Laufstreifenhälfte verlaufen im zentralen Laufstreifenbereich Z zwischen in Umfangsrichtung benachbarten Schrägrillen 1 jeweils drei Nuten 2, welche in Draufsicht unter einem Winkel α von 10° bis 50°, insbesondere von 25° bis 45°, zur Umfangsrichtung sowie bezogen auf die Umfangsrichtung gegensinnig zu den Schrägrillen 1 verlaufen. Die Nuten 2 begrenzen gemeinsam mit den Schrägrillen 1 im zentralen Laufstreifenbereich Z befindliche in Draufsicht im Wesentlichen parallelogrammförmige mittlere Blöcke 3, welche in Umfangsrichtung auf "Spitzen" stehend angeordnet sind.

Zwischen in Umfangsrichtung benachbarten Rillenabschnitten 1a der Schrägrillen 1 verläuft jeweils eine Querrille 4, welche beim gezeigten Ausführungsbeispiel in eine der am weitesten laufstreifenaußenseitig verlaufenden Nuten 2 oder an den Kreuzungsbereichen der Nuten 2 mit den Schrägrillen 1 einmündet. Die Querrillen 4, die Rillenabschnitte 1a der Schrägrillen 1 und die am weitesten laufstreifenaußenseitig verlaufenden Nuten 2 begrenzen zu Schulterblockreihen 6 gehörende schulterseitige Blöcke 5. Die schulterseitigen Blöcke 5 sind in der einen Umfangsrichtung jeweils von einer Querrille 4 und in der anderen Umfangsrichtung jeweils von einem Rillenabschnitt 1a begrenzt. Laufstreifeninnenseitig sind die schulterseitigen Blöcke 5 von den laufstreifenaußenseitig verlaufenden Nuten 2 begrenzt, wobei jeder zweite schulterseitige Block 5 innerhalb jeder Schulterblockreihe 6 ferner von einem unmittelbar an den Rillenabschnitt 1a anschließenden Abschnitt einer Schrägrille 1 begrenzt ist.

Jeder mittlere Block 3 und jeder schulterseitige Block 5 ist mit einer Anzahl von Einschnitten 7, 8 versehen, welche über den jeweiligen Block 3, 5 gleichmäßig verteilt sind und sich innerhalb jedes Blockes 3, 5 parallel zueinander erstrecken. Die in den mittleren Blöcken 3 verlaufenden Einschnitte 7 erstrecken sich in Draufsicht unter einem von der axialen Richtung um bis zu 35° abweichenden Winkel oder in axialer Richtung, verlaufen in Draufsicht zick-zack-förmig, alternativ insbesondere wellenförmig, und durchqueren den jeweiligen mittleren Block 3. Die schulterseitigen Blöcke 5 sind jeweils mit zwei oder drei Einschnitten 8 versehen, welche sich in Draufsicht im Wesentlichen parallel zueinander sowie im Wesentlichen parallel zum Rillenabschnitt 1a der Schrägrillen 1 erstrecken, in Draufsicht abschnittsweise trapezartig verlaufen und in eine Schrägrille 1 bzw. in eine Nut 2 einmünden. Die Einschnitte 7, 8 weisen eine Breite von 0,4 mm bis 0,8 mm und in radialer Richtung an ihrer tiefsten Stelle eine Tiefe von mindestens 50% der Profiltiefe auf. Randseitig können die Einschnitte 7, 8 in eine Schrägrille 1 bzw. eine Nut 2 einmündende, seichtere Endabschnitte aufweisen. Innerhalb der Bodenaufstandsfläche weisen die Einschnitte 7, 8 an ihren seichtesten Stellen eine Tiefe von vorzugsweise mindestens 20% der Profiltiefe auf. Die Einschnitte 8 werden zu ihren laufstreifenaußenseitigen Enden in bekannter Weise seichter.

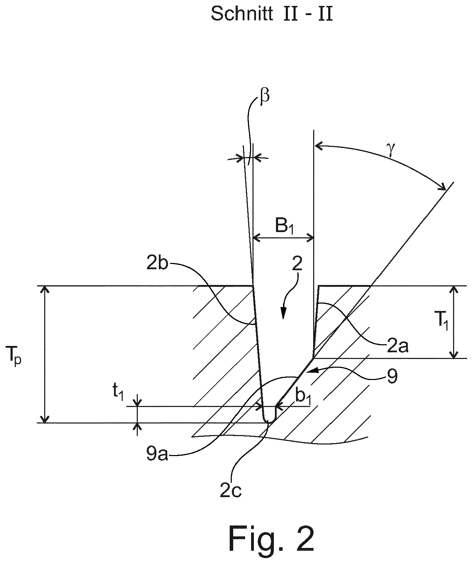

Wie Fig. 2 in Kombination mit Fig. 1 zeigt, ist jede Nut 2 durch eine laufstreifenaußenseitige Nutflanke 2a und eine laufstreifeninnenseitige Nutflanke 2b begrenzt, wobei die Nutflanken 2a, 2b zur radialen Richtung unter einem Winkel β (Fig. 2) von bis zu 10°, insbesondere von bis zu 4°, verlaufen. Alternativ können die Nutflanken 2a, 2b auch in radialer Richtung verlaufen. Zwischen den radial äußeren Enden der Nutflanken 2a, 2b weist jede Nut 2 eine Breite B₁ (Fig. 2) von 2,0 mm bis 6,0 mm auf.

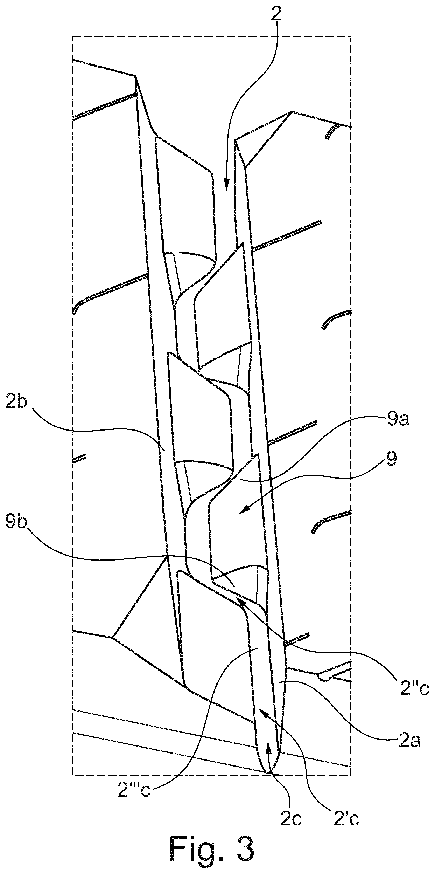

Wie Fig. 3 in Kombination mit Fig. 1 zeigt, sind in jeder Laufstreifenhälfte in den beiden weiter laufstreifenaußenseitig verlaufenden Nuten 2 an den Nutflanken 2a, 2b keilförmige Vorsprünge 9 ausgebildet, welche innerhalb der Nut 2 in regelmäßigen Abständen über die gesamte Nuterstreckung gleichmäßig verteilt angeordnet sind. An den laufstreifeninnenseitigen Nutflanken 2a sind jeweils zwei Vorsprünge 9 und an den laufstreifenaußenseitigen Nutflanken 2b sind jeweils drei Vorsprünge 9 ausgebildet. Wie insbesondere Fig. 3 zeigt, sind innerhalb jeder Nut 2 die an der Nutflanke 2a ausgebildeten Vorsprünge 9 abwechselnd mit den an der Nutflanke 2b ausgebildeten Vorsprüngen 9 angeordnet, wobei die bei den Nutenden liegenden Vorsprünge 9 unmittelbar an eine Schrägrille 1 angrenzen.

Die Vorsprünge 9 ragen in Draufsicht gegenüber dem Niveau der Nutflanken 2a, 2b derart in die Nut 2 hinein, dass die beiden an der Nutflanke 2a ausgebildeten Vorsprünge 9 jeweils in den Zwischenraum zwischen die an der gegenüberliegenden Nutflanke 2b ausgebildeten Vorsprünge 9 hineinragen. Am Grund der Nut 2 verbleibt dadurch zwischen den an den einander gegenüberliegenden Nutflanken 2a, 2b ausgebildeten Vorsprüngen 9 ein rillenartiger Nutgrundpfad 2c.

Jeder Vorsprung 9 ist in radialer Richtung durch eine Schrägfläche 9a begrenzt, welche, wie Fig. 2 zeigt, im Querschnitt der Nut 2 betrachtet, zur radialen Richtung unter einem Winkel γ von 10° bis 70°, insbesondere von 30° bis 45°, verläuft und derart geneigt ist, dass sie ausgehend von einer in radialer Richtung ermittelten Tiefe T₁ an der jeweiligen Nutflanke 2a, 2b in die Nut 2 hinein - sowie zum Nutgrundpfad 2c - verläuft. Die Tiefe T₁ beträgt 20% bis 60%, insbesondere mindestens 40%, der Profiltiefe Tp. In Erstreckungsrichtung der Nut 2 sind die Vorsprünge 9 jeweils durch zwei Seitenflächen 9b begrenzt. Die Seitenflächen 9b verlaufen zur radialen Richtung unter einem Winkel von bis zu 10°, können alternativ jedoch auch gekrümmt ausgeführt sein, und sind in Draufsicht zur Nutlaufrichtung insbesondere schräggestellt (Fig. 1). Die drei mittleren Vorsprünge 9 weisen in Draufsicht im Wesentlichen die Form eines gleichschenkeligen Trapezes mit einer an der Nutflanke 2a, 2b liegenden Basis auf. Die breiteste Stelle der Vorsprünge 9 mit einer Breite von 2,5 mm bis 8,0 mm, insbesondere von mindestens 5,0 mm, befindet sich an der Nutflanke 2a, 2b.

Gemäß Fig. 3 weist jeder Nutgrundpfad 2c entsprechend der Gestalt der Vorsprünge 9 in Laufrichtung der zugehörigen Nut 2 ausgerichtete Pfadabschnitte 2'c auf, welche zwischen einem Vorsprung 9 und der jeweiligen Nutflanke 2a, 2b und daher abwechselnd entlang der laufstreifeninnenseitigen Nutflanke 2a und der laufstreifenaußenseitigen Nutflanke 2b verlaufen. Zwischen den Pfadabschnitten 2'c verlaufen Pfadabschnitte 2"c, welche ferner zwischen den von gegenüberliegenden Nutflanken 2a, 2b ausgehenden Vorsprüngen 9 verlaufen. Wie Fig. 2 zeigt, ist der Nutgrundpfad 2c in radialer Richtung durch einen Boden 2"'c begrenzt, welcher beim gezeigten Ausführungsbeispiel auf dem Niveau der Profiltiefe Tp verläuft. Alternativ kann der Boden 2"'c des Nutgrundpfandes 2c in einer Tiefe verlaufen, die mindestens 90% der Profiltiefe T_{P}, insbesondere mindestens 95% der Profiltiefe T_{P}, beträgt. Der Nutgrundpfad 2c weist eine Breite b₁ von 0,5 mm bis 1,5 mm sowie gegenüber dem im Querschnitt tiefsten Punkt der Schrägfläche 9a in radialer Richtung eine Tiefe t₁ auf, welche mindestens 0,5 mm und höchstens 60%, insbesondere höchstens 30%, der Profiltiefe Tp beträgt. Vorzugsweise beträgt die Tiefe t₁ des Nutgrundpfades 2c bis zu 2,0 mm, besonders bevorzugter Weise bis zu 1,5 mm. Die Tiefe t₁ weist der Nutgrundpfad 2c, entsprechend der Ausgestaltung der Vorsprünge 9, zumindest im Bereich der in Laufrichtung ausgerichteten Pfadabschnitte 2'c auf.

Die Größe des Winkels γ, unter welchem die Schrägflächen 9a zur radialen Richtung verlaufen, ergibt sich aus der Profiltiefe Tp, der Größe der Tiefen T₁ und t₁ sowie der Breite B₁ der Nut 2.

Die Erfindung ist auf das beschriebene Ausführungsbeispiel nicht beschränkt. Insbesondere verlaufen in jeder Laufstreifenhälfte zumindest zwei Nuten 2, wobei an jeder Nutflanke 2a, 2b der Nuten 2 zumindest ein Vorsprung 9 ausgebildet ist. Die mittleren Blöcke 3 weisen in Draufsicht eine sich aus dem Verlauf der Schrägrillen 1 und Nuten 2 ergebende parallelogrammartige Form auf. Die Vorsprünge 9 können in sämtlichen Nuten 2 oder nur in einigen Nuten 2 ausgebildet sein. Die Gestalt und die Anzahl der Einschnitte 7, 8 sowie deren Positionierung innerhalb der mittleren Blöcke 3 und der schulterseitigen Blöcke 5 können von der gezeigten Ausführung abweichen.

### Bezugsziffernliste

- 1 ......................: Schrägrille
- 1a ....................: Rillenabschnitt
- 2 ......................: Nut
- 2a, 2b...............: Nutflanke
- 2c ....................: Nutgrundpfad
- 2'c, 2"c ...........: Pfadabschnitt
- 2"'c.................: Boden
- 3 ......................: mittlerer Block
- 4 ......................: Querrille
- 5 ......................: schulterseitige Block
- 6 ......................: Schulterblockreihe
- 7, 8 ..................: Einschnitt
- 9 ......................: Vorsprung
- 9a ....................: Schrägfläche
- 9b ....................: Seitenfläche
- B, B₁, B_{Z}, b₁ ....: Breite
- P₁.....................: Pfeil
- T₁, t₁ ................: Tiefe
- Tₚ ....................: Profiltiefe
- Z......................: zentraler Laufstreifenbereich
- α, β, γ ..............: Winkel

## Patentansprüche

1. Fahrzeugluftreifen mit einem laufrichtungsgebunden ausgeführten Laufstreifen, welcher mit über die Laufstreifenbreite V-förmig zueinander verlaufenden Schrägrillen (1) versehen ist, wobei der Laufstreifen Schulterblockreihen (6) mit schulterseitigen Blöcken (5) und einen zentralen Laufstreifenbereich (Z) mit mittleren Blöcken (3) aufweist, wobei die mittleren Blöcke (3) und die schulterseitigen Blöcke (5) jeweils mit einer Anzahl von sich in Draufsicht parallel zueinander erstreckenden Einschnitten (7, 8) versehen sind,
wobei im zentralen Laufstreifenbereich (Z) in jeder Laufstreifenhälfte zwischen in Umfangsrichtung benachbarten Schrägrillen (1) zumindest zwei in Draufsicht gegensinnig zu den Schrägrillen (1) geneigte Nuten (2) mit Nutflanken (2a, 2b) verlaufen, welche den mittleren Blöcken (3) gemeinsam mit den Schrägrillen (1) in Draufsicht eine in Umfangsrichtung auf Spitzen stehende parallelogrammartige Gestalt verleihen,
**dadurch gekennzeichnet,**
**dass** zu den Nuten (2), welche gegensinnig zu den Schrägrillen (1) geneigt sind, Nuten (2) gehören, an deren Nutflanken (2a, 2b) zumindest jeweils ein keilförmiger Vorsprung (9) ausgebildet ist, welche Vorsprünge (9) in der Erstreckungsrichtung der Nut (2) betrachtet überlappen, wobei zwischen den von gegenüberliegenden Nutflanken (2a, 2b) ausgehenden Vorsprüngen (9) und zwischen jedem Vorsprung (9) und der gegenüberliegenden Nutflanke (2a, 2b) ein Nutgrundpfad (2c) mit einer Breite (b₁) von 0,5 mm bis 1,5 mm verläuft, wobei der Nutgrundpfad (2c) in radialer Richtung eine Tiefe (t₁) von mindestens 0,5 mm und von höchstens 60% der Profiltiefe (Tp) aufweist.

2. Fahrzeugluftreifen nach Anspruch 1, **dadurch gekennzeichnet, dass** jeder keilförmige Vorsprung (9) in radialer Richtung durch eine Schrägfläche (9a) begrenzt ist, welche, im Querschnitt der Nut (2) betrachtet, zur radialen Richtung unter einem Winkel (γ) von 10° bis 70°, insbesondere von 30° bis 45°, verläuft und derart geneigt ist, dass sie ausgehend von der Nutflanke (2a, 2b) in Richtung Nutgrundpfad (2c) verläuft.

3. Fahrzeugluftreifen nach Anspruch 2, **dadurch gekennzeichnet, dass** die Schrägfläche (9a) von einer in radialen Richtung ermittelten Tiefe (T₁) von 20% bis 60%, insbesondere von mindestens 40%, der Profiltiefe (T_{P}) ausgehend von der Nutflanke (2a, 2b) in Richtung Nutgrundpfad (2c) verläuft.

4. Fahrzeugluftreifen nach einem der Ansprüche 1 bis 3, **dadurch gekennzeichnet, dass** der Nutgrundpfad (2c) durch einen Boden (2"'c) begrenzt ist, welcher auf einem Niveau von mindestens 90% der Profiltiefe (T_{P}), insbesondere mindestens 95% der Profiltiefe (T_{P}), und besonders bevorzugter Weise auf dem Niveau der Profiltiefe (T_{P}) verläuft.

5. Fahrzeugluftreifen nach einem der Ansprüche 1 bis 4, **dadurch gekennzeichnet, dass** die Tiefe (t₁) des Nutgrundpfades (2c) bis zu 2,0 mm, bevorzugt bis zu 1,5 mm, beträgt.

6. Fahrzeugluftreifen nach einem der Ansprüche 1 bis 5, **dadurch gekennzeichnet, dass** jeder Vorsprung (9) an der Nutflanke (2a, 2b) an seiner breitesten Stelle eine Breite von 2,5 mm bis 8,0 mm, insbesondere von mindestens 5,0 mm, aufweist.

7. Fahrzeugluftreifen nach einem der Ansprüche 1 bis 6, **dadurch gekennzeichnet, dass** im zentralen Laufstreifenbereich (Z) in jeder Laufstreifenhälfte zwischen in Umfangsrichtung benachbarten Schrägrillen (1) zumindest drei gegensinnig zu den Schrägrillen (1) geneigte Nuten (2) verlaufen.

8. Fahrzeugluftreifen nach Anspruch 7, **dadurch gekennzeichnet, dass** in jeder Laufstreifenhälfte zumindest in den beiden weiter laufstreifenaußenseitig befindlichen Nuten (2) Vorsprünge (9) ausgebildet sind.

9. Fahrzeugluftreifen nach einem der Ansprüche 1 bis 8, **dadurch gekennzeichnet, dass** jede Nut (2) eine weiter laufstreifenaußenseitig befindliche Nutflanke (2a) und eine weiter laufstreifeninnenseitig befindliche Nutflanke (2a) aufweist, wobei die Anzahl der an der weiter laufstreifenaußenseitig befindlichen Nutflanke (2a) ausgebildeten Vorsprünge (9) größer ist als die Anzahl der an der weiter laufstreifeninnenseitig befindlichen Nutflanke (2a) ausgebildeten Vorsprünge (9), und wobei an der weiter laufstreifenaußenseitig befindlichen Nutflanke (2a) insbesondere drei Vorsprünge (9) und an der weiter laufstreifeninnenseitig befindlichen Nutflanke (2a) insbesondere zwei Vorsprünge (9) ausgebildet sind.

10. Fahrzeugluftreifen nach Anspruch 9, **dadurch gekennzeichnet, dass** zumindest ein an der einen Nutflanke (2a, 2b) ausgebildeter Vorsprung (9) in den Zwischenraum zwischen zwei unmittelbar benachbarten, an der gegenüberliegenden Nutflanke (2a, 2b) ausgebildeten Vorsprüngen (9) ragt.

11. Fahrzeugluftreifen nach einem der Ansprüche 1 bis 10, **dadurch gekennzeichnet, dass** die innerhalb einer Nut (2) befindlichen Vorsprünge (9) in regelmäßigen Abständen über die Erstreckung der Nut (2) angeordnet sind.

12. Fahrzeugluftreifen nach einem der Ansprüche 1 bis 11, dass die Nuten (2) in Draufsicht zur Umfangsrichtung unter einem Winkel (α) von 10° bis 50°, insbesondere von 25° bis 45°, verlaufen.

13. Fahrzeugluftreifen nach einem der Ansprüche 1 bis 12, **dadurch gekennzeichnet, dass** die Schrägrillen (1) im zentralen Laufstreifenbereich (Z) in Draufsicht zur Umfangsrichtung unter einem Winkel von 20° bis 70°, vorzugsweise von 40° bis 60°, verlaufen.

14. Fahrzeugluftreifen nach einem der Ansprüche 1 bis 13, **dadurch gekennzeichnet, dass** der zentrale Laufstreifenbereich (Z) in axialer Richtung eine Breite (Bz) von 50% bis 80% der Breite (B) der Bodenaufstandsfläche einnimmt.

15. Fahrzeugluftreifen nach einem der Ansprüche 1 bis 14, **dadurch gekennzeichnet, dass** die Nuten (2) an den radial äußeren Enden ihrer Nutflanken (2a, 2b) eine Breite (B₁) von 2,0 mm bis 6,0 mm aufweisen.

## Claims

1. Vehicle pneumatic tyre having a tread strip of directional configuration which is provided with oblique grooves (1) which run in a V-shaped manner with respect to one another over the tread strip width, the tread strip having shoulder block rows (6) with shoulder-side blocks (5) and a central tread strip region (Z) with central blocks (3), the central blocks (3) and the shoulder-side blocks (5) being provided in each case with a number of sipes (7, 8) which extend parallel to one another in plan view, at least two grooves (2) with groove flanks (2a, 2b), which grooves (2) are inclined in the opposite direction with respect to the oblique grooves (1) in plan view, running in the central tread strip region (Z) in each tread strip half between oblique grooves (1) which are adjacent in the circumferential direction, which grooves (2) impart a parallelogram-like design standing on its tip in the circumferential direction to the central blocks (3) together with the oblique grooves (1) in plan view, **characterized in that** grooves (2) belong to the grooves (2) which are inclined in the opposite direction with respect to the oblique grooves (1), on the groove flanks (2a, 2b) of which grooves (2) at least in each case one wedge-shaped projection (9) is configured, which projections (9) overlap as viewed in the direction of extent of the groove (2), a groove bottom path (2c) with a width (b₁) of from 0.5 mm to 1.5 mm running between the projections (9) which emanate from opposite groove flanks (2a, 2b) and between each projection (9) and the opposite groove flank (2a, 2b), the groove bottom path (2c) having a depth (t₁) in the radial direction of at least 0.5 mm and of at most 60% of the profile depth (T_{P}).

2. Vehicle pneumatic tyre according to Claim 1, **characterized in that** each wedge-shaped projection (9) is delimited in the radial direction by way of an oblique face (9a) which, as viewed in the cross section of the groove (2), runs at an angle (γ) with respect to the radial direction of from 10° to 70°, in particular of from 30° to 45°, and is inclined in such a way that, starting from the groove flank (2a, 2b), it runs in the direction of the groove bottom path (2c).

3. Vehicle pneumatic tyre according to Claim 2, **characterized in that** the oblique face (9a) runs in the direction of the groove bottom path (2c), starting from the groove flank (2a, 2b), from a depth (T₁) determined in the radial direction of from 20% to 60%, in particular of at least 40%, of the profile depth (T_{P}).

4. Vehicle pneumatic tyre according to one of Claims 1 to 3, **characterized in that** the groove bottom path (2c) is delimited by way of a bottom (2"'c) which runs at a level of at least 90% of the profile depth (T_{P}), in particular at least 95% of the profile depth (T_{P}), and particularly preferably at the level of the profile depth (T_{P}).

5. Pneumatic vehicle tyre according to one of Claims 1 to 4, **characterized in that** the depth (t₁) of the groove bottom path (2c) is up to 2.0 mm, preferably up to 1.5 mm.

6. Vehicle pneumatic tyre according to one of Claims 1 to 5, **characterized in that** each projection (9) on the groove flank (2a, 2b) has a width at its widest point of from 2.5 mm to 8.0 mm, in particular of at least 5.0 mm.

7. Vehicle pneumatic tyre according to one of Claims 1 to 6, **characterized in that** at least three grooves (2) which are inclined in the opposite direction with respect to the oblique grooves (1) run in the central tread strip region (Z) in each tread strip half between oblique grooves (1) which are adjacent in the circumferential direction.

8. Vehicle pneumatic tyre according to Claim 7, **characterized in that** projections (9) are configured in each tread strip half at least in the two grooves (2) which are situated further to the tread strip outer side.

9. Vehicle pneumatic tyre according to one of Claims 1 to 8, **characterized in that** each groove (2) has a groove flank (2a) which is situated further to the tread strip outer side and a groove flank (2a) which is situated further to the tread strip inner side, the number of projections (9) which are configured on the groove flank (2a) which is situated further to the tread strip outer side being greater than the number of projections (9) which are configured on the groove flank (2a) which is situated further to the tread strip inner side, and, in particular, three projections (9) being configured on the groove flank (2a) which is situated further to the tread strip outer side and, in particular, two projections (9) being configured on the groove flank (2a) which is situated further to the tread strip inner side.

10. Vehicle pneumatic tyre according to Claim 9, **characterized in that** at least one projection (9) which is configured on the one groove flank (2a, 2b) protrudes into the intermediate space between two immediately adjacent projections (9) which are configured on the opposite groove flank (2a, 2b).

11. Vehicle pneumatic tyre according to one of Claims 1 to 10, **characterized in that** the projections (9) which are situated within a groove (2) are arranged at regular spacings over the extent of the groove (2).

12. Vehicle pneumatic tyre according to one of Claims 1 to 11, **characterized in that**, in plan view, the grooves (2) run at an angle (α) with respect to the circumferential direction of from 10° to 50°, in particular of from 25° to 45°.

13. Vehicle pneumatic tyre according to one of Claims 1 to 12, **characterized in that**, in plan view, the oblique grooves (1) in the central tread strip region (Z) run at an angle with respect to the circumferential direction of from 20° to 70°, preferably of from 40° to 60°.

14. Vehicle pneumatic tyre according to one of Claims 1 to 13, **characterized in that** the central tread strip region (Z) assumes a width (B_{Z}) in the axial direction of from 50% to 80% of the width (B) of the ground contact area.

15. Vehicle pneumatic tyre according to one of Claims 1 to 14, **characterized in that** the grooves (2) have a width (B₁) of from 2.0 mm to 6.0 mm at the radially outer ends of their groove flanks (2a, 2b).

## Revendications

1. Pneumatique de véhicule, comprenant une bande de roulement réalisée en tenant compte du sens de la marche et munie de rainures obliques (1) s'étendant en forme de V les unes par rapport aux autres, dans lequel la bande de roulement présente des séries de blocs d'épaulement (6) comprenant des blocs côté épaulement (5) et une zone de bande de roulement centrale (Z) comprenant des blocs intermédiaires (3), dans lequel les blocs intermédiaires (3) et les blocs côté épaulement (5) sont respectivement munis d'un nombre d'entailles (7, 8) s'étendant en parallèle les unes aux autres en vue de dessus, dans lequel, dans la zone de bande de roulement centrale (Z), dans chaque moitié de bande de roulement, entre des rainures obliques (1) voisines dans la direction circonférentielle, s'étendent au moins deux rainures (2) munies de flancs de rainure (2a, 2b) et inclinées en sens inverse aux rainures obliques (1) en vue de dessus qui confèrent, conjointement avec les rainures obliques (1), aux blocs intermédiaires (3) une forme de type parallélogramme debout sur la pointe dans la direction circonférentielle en vue de dessus,
**caractérisé en ce que**
les rainures (2) qui sont inclinées en sens inverse aux rainures obliques (1) comprennent des rainures (2) sur les flancs de rainure (2a, 2b) desquelles est réalisée au moins une saillie en forme de coin (9) respectivement, lesdites saillies (9) se chevauchant, vues dans la direction d'extension de la rainure (2), dans lequel, entre les saillies (9) partant de flancs de rainure (2a, 2b) opposés et entre chaque saillie (9) et le flanc de rainure opposé (2a, 2b) s'étend un trajet de fond de rainure (2c) d'une largeur (b₁) de 0,5 mm à 1,5 mm, le trajet de fond de rainure (2c) présentant dans la direction radiale une profondeur (t₁) de 0,5 mm au minimum et de 60 % au maximum de la profondeur de sculpture (T_{P}).

2. Pneumatique de véhicule selon la revendication 1, **caractérisé en ce que** chaque saillie en forme de coin (9) est limitée dans la direction radiale par une surface inclinée (9a) qui, vue en section transversale de la rainure (2), s'étend par rapport à la direction radiale selon un angle (γ) de 10° à 70°, en particulier de 30° à 45°, et est inclinée de telle sorte qu'elle s'étend en direction du trajet de fond de rainure (2c) en partant du flanc de rainure (2a, 2b).

3. Pneumatique de véhicule selon la revendication 2, **caractérisé en ce que** la surface inclinée (9a), en partant d'une profondeur (T₁) déterminée dans la direction radiale de 20 % à 60 %, en particulier d'au moins 40 %, de la profondeur de sculpture (T_{P}), profile depuis le flanc de rainure (2a, 2b) en direction du trajet de fond de rainure (2c).

4. Pneumatique de véhicule selon l'une quelconque des revendications 1 à 3, **caractérisé en ce que** le trajet de fond de rainure (2c) est limité par un fond (2"'c) qui s'étend à un niveau d'au moins 90 % de la profondeur de sculpture (T_{P}), en particulier d'au moins 95 % de la profondeur de sculpture (T_{P}), et de manière particulièrement préférée au niveau de la profondeur de sculpture (T_{P}).

5. Pneumatique de véhicule selon l'une quelconque des revendications 1 à 4, **caractérisé en ce que** la profondeur (t₁) du trajet de fond de rainure (2c) mesure 2,0 mm, de préférence 1,5 mm.

6. Pneumatique de véhicule selon l'une quelconque des revendications 1 à 5, **caractérisé en ce que** chaque saillie (9) présente au niveau du flanc de rainure (2a, 2b), en son point le plus large, une largeur de 2,5 mm à 8,0 mm, en particulier d'au moins 5,0 mm.

7. Pneumatique de véhicule selon l'une quelconque des revendications 1 à 6, **caractérisé en ce que** dans la zone de bande de roulement centrale (Z), dans chaque moitié de bande de roulement, au moins trois rainures (2) inclinées en sens inverse aux rainures obliques (1) s'étendent entre des rainures obliques (1) voisines dans la direction circonférentielle.

8. Pneumatique de véhicule selon la revendication 7, **caractérisé en ce que** dans chaque moitié de bande de roulement, des saillies (9) sont réalisées au moins dans les deux rainures (2) se trouvant plus loin côté extérieur de la bande de roulement.

9. Pneumatique de véhicule selon l'une quelconque des revendications 1 à 8, **caractérisé en ce que** chaque rainure (2) présente un flanc de rainure (2a) se trouvant plus loin côté extérieur de la bande de roulement et un flanc de rainure (2a) se trouvant plus loin côté intérieur de la bande de roulement, dans lequel le nombre des saillies (9) réalisées sur le flanc de rainure (2a) se trouvant plus loin côté extérieur de la bande de roulement est supérieur au nombre des saillies (9) réalisées sur le flanc de rainure (2a) se trouvant plus loin côté intérieur de la bande de roulement, et dans lequel, sur le flanc de rainure (2a) se trouvant plus loin côté intérieur de la bande de roulement, en particulier trois saillies (9) sont réalisées, et sur le flanc de rainure (2a) se trouvant plus loin côté intérieur de la bande de roulement, en particulier deux saillies (9) sont réalisées.

10. Pneumatique de véhicule selon la revendication 9, **caractérisé en ce qu'**au moins une saillie (9) réalisée sur un flanc de rainure (2a, 2b) pénètre dans l'intervalle entre deux saillies (9) directement voisines et réalisées sur le flanc de rainure (2a, 2b) opposé.

11. Pneumatique de véhicule selon l'une quelconque des revendications 1 à 10, **caractérisé en ce que** les saillies (9) se trouvant à l'intérieur d'une rainure (2) sont disposées à intervalles réguliers sur l'extension de la rainure (2).

12. Pneumatique de véhicule selon l'une quelconque des revendications 1 à 11, **caractérisé en ce que** les rainures (2) s'étendent selon un angle (α) de 10° à 50°, en particulier de 25° à 45°, par rapport à la direction circonférentielle en vue de dessus.

13. Pneumatique de véhicule selon l'une quelconque des revendications 1 à 12, **caractérisé en ce que** dans la zone de bande de roulement centrale (Z), les rainures obliques (1) s'étendent selon un angle de 20° à 70°, de préférence de 40° à 60°, par rapport à la direction circonférentielle en vue de dessus.

14. Pneumatique de véhicule selon l'une quelconque des revendications 1 à 13, **caractérisé en ce que** la zone de bande de roulement centrale (Z) occupe dans la direction axiale une largeur (B_{Z}) de 50 % à 80 % de la largeur (B) de la surface de contact avec le sol.

15. Pneumatique de véhicule selon l'une quelconque des revendications 1 à 14, **caractérisé en ce que** les rainures (2) présentent aux extrémités radialement extérieures de leurs flancs de rainure (2a, 2b) une largeur (B₁) de 2,0 mm à 6,0 mm.
